Europäisches Patentamt

**European Patent Office**

Office européen des brevets

(11) Publication number: **0 434 387 A2**

## EUROPEAN PATENT APPLICATION

(21) Application number: **90313906.1**

(22) Date of filing: **19.12.90**

(51) Int. Cl.⁵: **C08F 2/22**, C08F 255/02, C08F 259/04, C08F 263/02, //(C08F255/02,220:00), (C08F259/04,220:00), (C08F263/02,220:00)

(30) Priority: **22.12.89 EP 89313548**

(43) Date of publication of application: **26.06.91 Bulletin 91/26**

(84) Designated Contracting States: **AT BE CH DE DK ES FR GB GR IT LI NL SE**

(71) Applicant: **VINAMUL LTD.**
**Mill Lane**
**Carshalton, Surrey SM5 2JU(GB)**

(72) Inventor: **Baines Stephen John**
**28 Rowlands Road, Roffey**
**Horsham, West Sussex RH12 4LH(GB)**

(74) Representative: **Roscoe, Brian Corrie et al**
**UNILEVER PLC Patents Division P.O. Box 68**
**Unilever House**
**London EC4P 4BQ(GB)**

(54) **Emulsion polymerisation.**

(57) A self crosslinking vinyl(C1 to C4)alkanoate/alkylene copolymer emulsion is overpolymerised with alkyl(C1 to C4) (meth)acrylate, acrylonitrile or mixtures of these monomers. The product emulsions are usable as binders for textiles, carpets and paper; they provide solvent resistance while retaining toughness/softness to the treated substrate.

# EMULSION POLYMERISATION

## Field of the Invention

The invention relates to overpolymerised copolymer emulsion suitable for application to surfaces including woven and non-woven materials. The overpolymerised emulsion comprises a core of self crosslinkable vinyl alkanoate/alkylene copolymer.

## Background to the Invention

Surface coating emulsions are required to have certain characteristics for applications in surface coatings.

These emulsions are of particular value in coating textiles for example as binders for non woven fabrics, impregnation of needled carpets to give stability and rigidity, back coating for carpets to give tuft binding and edge fray resistance, and general fabric coating, impregnation and finishing. These emulsions also have value in coating of paper products, for example wall paper ground coats, paper and paper board to give, e.g. surface binding and water resistance. These emulsions are of value as binders for non wovens and carpet coating.

## General description of the invention:

The present invention provides overpolymerised copolymers which are based on a core of vinyl(Cl to C4) alkanoates/C2 to C4 alkylenes copolymers which are self crosslinkable.

The invention provides copolymer emulsions containing from about 30% to about 65% by weight solids which comprise copolymer particles having an average particle size in the range about 0.05 micron to about 10 micron comprising a core of self crosslinkable vinyl(C1 to C4)alkanoate/C2 to C4 alkylene copolymer overpolymerised with from about 3% to about 150% by weight of the base copolymer solids of alkyl(C1 to C4) (meth)acrylate, acrylonitrile and mixtures thereof. The preferred (meth) acrylate is butyl acrylate.

The invention extends to a method of preparing an overpolymerisation copolymer emulsion containing from about 30% to about 65% by weight solids wherein a copolymer emulsion comprising self crosslinkable vinyl(C1 to C4)alkanoate/C2 to C4 alkylene copolymers, having an average particle size from about 0.05 micron to about 4 micron, is overpolymerised with from about 3% to about 150% preferably up to about 100% by weight of the base copolymer solids of alkyl (C1 to C4) (meth)acrylate, acrylonitrile and mixtures thereof. The proportion of alkylene in the core is usually in the range about 5% to about 70% by weight of the vinyl alkanoate and alkylene, preferably 10% to 50%. The preferred alkyl(meth) acrylate is butyl acrylate.

The range of solids in the final emulsion is from 30% at which the benefits associated with the system become effective, to a level, 65% by weight, above which it is difficult to obtain stable usable emulsions. It is necessary to overpolymerise with at least 3% of the outer copolymer to obtain the desired benefits and an upper level of 150% is given by cost considerations.

Vinyl acetate is the preferred alkanoate but vinyl propionate, formate, butyrate and isobutyrate are usable. The alkylene is preferably ethylene but propylene, butylene and isobutylene are also usable.

Vinyl chloride is optionally present in the core at a level up to about 60% by weight.

Optionally the base copolymer emulsion may contain minor monomer components, for example up to about 10% by weight of the monomers. Examples are sodium vinyl sulphonate, acrylic acid, methacrylic acid, acrylamide, hydroxy functional acrylates, vinyl silanes and vinyl versatates. The latter monomer may be used at higher levels, eg up 60% by weight. It is sometimes preferred to have the core particles internally crosslinked to enhance an aspect of performance in use. This is achieved, for example, by including a monomer with more than one unsaturated polymerisable group eg triallyl cyanurate and diallyl maleate.

The core emulsion particles are required to be crosslinked to provide dimensional stability during overpolymerisation. This crosslinking can be obtained by internal crosslinking or self crosslinking. In the former route a monomer with two or more unsaturated polymerisable radicals, e.g. triallyl cyanurate (TAG), is used. These crosslinking monomers are capable of polymerising within the chains of the major monomers and then crosslink with the available third unsaturated radical in adjacent chains. Self crosslinking is obtained by using a minor monomer which crosslinks in a separate treatment step after the polymerisation process. Examples are N-methylol acrylamide (NMA) and N-isobutoxymethyl acrylamide (NIBA).

The overpolymerisation stage is performed using alkyl(C2 to C4)acrylate, preferably butyl acrylate, (meth)acrylonitrile or mixtures of these monomers. Optionally alkyl(C1 to C4)methacrylate and/or styrene may be present at low levels of the overpolymer layer. For some applications a self reactive or crosslinkable monomer, eg TAC or NIBA, may be included. The overpolymerisation may be performed with slow continuous addition of monomers or by allowing the monomers a period to mix thoroughly with the base polymer before reaction or by a process combining both techniques. Small amounts of additional, preferably nonionic, surfactant or other stabiliser may be added for the overpolymerisation stage. The preferred initiator for this stage is a redox couple, for example t-butyl hydroperoxide with sodium formaldehyde sulphoxylate.

Vinyl acetate/ethylene emulsions are generally more thermoplastic than acrylic emulsions. That is they have worse runnability and tend to stick more to drying apparatus, eg drums. Ths use of alkyl acrylate or (meth) acrylonitrile improves these properties.

Additionally vinyl acetate/ethylene emulsions have reduced strength at higher ethylene levels. These levels are obtainable by specific processing steps, eg. higher initiator levels, this can reduce molecular weights, high pressures and longer reaction times, However these measures may not be practicable for practical or economic reasons. Overpolymerising with alkyl acrylate provides softness while retaining strength.

Vinyl acetate/ethylene when used on non wovens can give sticking on the drying drums whereas acrylate is less susceptible. An overpolymer allows a reduced amount of ethylene to be used by giving softer emulsion properties.

Test Methods

i) Viscosity: A Brookfield viscometer type RVT was used with the spindle number and speed (rpm) as shown. Measurements were made at 25° C.

ii) Particle size distribution: the weight mean particle diameter was determined with the aid of a disc centrifuge (4) obtainable from Joyce Loebl. This device uses the principle of sedimentation with gravity enhanced sedimentation. The disc is a transparent rotor with a cavity diameter of 100mm and depth 6mm. A sample volume of 0.5ml was used at a concentration not exceeding 2.5% non volatiles, usually about 0.15%. The fill volume of spin fluid was 10 to 40ml, usually in multiples of 10 + 1ml of buffer. The buffer liquid and sample diluent were methanol (30%)/water. The test runs were performed at 10K rpm/11.

iii) Film tensile strength: The stress-strain properties were measured on a J J Lloyd tensometer using a 50N load cell, a fixed elongation rate of 10cm/min and a 20° C constant temperature/humidity environment. Testing was carried out on strips of cured (120° C for 30 minutes) polymer film, measuring approx. 4cm x 1cm x 0.3mm.

iv) Area swelling: 1 sq. in. pieces of the cured (120° C for 30 mins) polymer are soaked in perchloroethylene for 30 min. This area is measured and expressed as a ratio of the original area. This is a measure of dry clean performance with the lower ratios performing best.

v) Acetone extraction: Filter paper was soaked with emulsion, cured (165° C for 1 minute) and boiled in acetone for 2 hours. The amount retained on the paper was measured. This gives the acetone insolubles and is a measure of performance in solvent resistant wipes with higher readings of insolubles providing better performance. Examples V and VI gives results on uncured material.

Vi) Fabric tensile strength: The standard method of the European Disposables and Non wovens Association (EDANA) was used. A heavy Chicopee web was weighed and sandwiched between two layers of polypropylene net. The web and cover were impregnated with the emulsion using a Roaches mangle and dried at 60° C for 30 minutes and conditioned at 20° C for 24 hrs. After curing on a rotary iron at 160° C for 4 passes. The strength was determined with an Instron at 100mm per minute and three strips tested for wet, dry and acetone strength.

Specific description of the Invention

Examples of the copolymer emulsions of the invention and their methods of preparation will now be given to illustrate but not limit the invention.

In the examples two base emulsions, A and B, having the following characteristics were used.

|  | A | B |
|---|---|---|
| Polymer type | VA/E (20%) | VA/E (40%) |
|  | NMA 3% | NMA 5% |
| non volatile content (%) | 49-51 | 44-46 |
| viscosity (poise) | 2-6 | 0.3-1.0 |
| (spindle/speed) | (3/20) | (2/50) |
| pH | 4-5 | 3.5-4.5 |
| particle size (micron) | 0.2-1 | 0.2-1.0 |
| Tg (°C) | 0 | -18 |
| handle | soft | very soft |
| solvent resistance | medium | high |
| stabilising system | surfactant | surfactant |
| polarity | nonionic | anionic |

These copolymer emulsions are obtainable from Vinamul Ltd of Carshalton, England.

The base polymer emulsions were then overpolymerised with butyl acrylate (BA) or acrylonitrile (ACN) using the following procedure.

Base polymer (500g) having a nominal solids content of 50% was introduced into a vessel and its temperature adjusted to 30°C. The emulsion was then surface purged with nitrogen for 30 mins. Butyl acrylate (12.5g) was then added to the emulsion with stirring and the surface again purged with nitrogen for 30 mins; this period allows thorough mixing and purging. A redox initiator system was used comprising t-butyl hydroperoxide (0.062g in 6g water) and sodium formaldehyde sulphoxylate (0.062g in 6g water). These solutions were added over a period of 30 minutes after the second purging stage. After addition of the initiator system the emulsion was held for a further 30 minutes to give an overpolymer comprising 5% w/w butyl acrylate.

Different amounts of butyl acrylate can be overpolymerised by adding appropriate multiples of 12.5g and using the same multiples of the redox solutions.

Acrylonitrile and acrylonitrile/butyl acrylate mixtures are overpolymerised on a suitable base polymer using the same procedure.

A range of overpolymerised copolymers were tested for tensile strength, area swelling and acetone insolubles. The results for combinations of base emulsions A and B with butyl acrylate (BA) and acrylonitrile (ACN) are given in Examples I, II, III, IV and V. Example V quotes fabric tensile strength also.

Example I

Base A + butyl acrylate.

4

| % BA | Tensile Strength (N/mm²) | | | Area Swelling | Acetone Insolubles (%) |
|---|---|---|---|---|---|
| | 25% Elong. | Break | Elong (%) | | |
| nil | 0.211 | 2.88 | 597 | 2.65 | 90.1 |
| 5% | 0.183 | 2.84 | 607 | 2.72 | 89.8 |
| 10% | 0.196 | 2.59 | 574 | 2.98 | 90.8 |
| 20% | 0.150 | 2.87 | 611 | 3.31 | 89.3 |

These results demonstrate the softness of the copolymer base is improved but the strength and solvent resistance are maintained.

Example II

Base B + butyl acrylate

| % BA | Tensile Strength (N/mm²) | | | Area Swelling | Acetone Insolubles (%) |
|---|---|---|---|---|---|
| | 25% Elong. | Break | Elong (%) | | |
| nil | 0.162 | 2.82 | 304 | 2.81 | 89.2 |
| 5% | 0.156 | 2.95 | 323 | 2.81 | 88.7 |
| 10% | 0.144 | 2.77 | 322 | 2.86 | 87.7 |
| 20% | 0.132 | 2.93 | 320 | 2.94 | 88.2 |

These results demonstrated the softness of the copolymer base is improved but the strength and solvent resistance are maintained.

Example III

Base A + acrylonitrile and butyl acrylate

| % ACN | BA | Tensile Strength (N/mm²) | | | Area Swelling | Acetone Insolubles (%) |
|---|---|---|---|---|---|---|
| | | 25% Elong. | Break | Elong (%) | | |
| nil | nil | 0.244 | 2.55 | 584 | 2.61 | 84.6 |
| 5% | nil | 0.334 | 2.59 | 434 | 2.49 | 85.0 |
| 5% | 5% | 0.349 | 3.99 | 508 | 2.06 | 86.2 |
| 10% | 5% | 0.399 | 5.06 | 549 | 2.26 | 86.9 |
| 10% | 10% | 0.375 | 4.95 | 569 | 2.24 | 82.6 |
| 15% | 5% | 0.529 | 4.15 | 392 | 2.15 | 86.3 |

These results show the strength of the base polymer is increased and the solvent resistance is improved. These benefits would not be obtained by copolymerising acrylonitrile with vinyl acetate because low conversion and weak copolymers are the result.

EXAMPLE IV

Base B + acrylonitrile & butyl acrylate

| % ACN | BA | Tensile Strength (N/mm²) | | | Area Swelling | Acetone Insolubles (%) |
|---|---|---|---|---|---|---|
| | | 25% Elong. | Break | Elong (%) | | |
| nil | nil | 0.146 | 3.16 | 322 | 2.98 | 88.3 |
| 5% | nil | 0.205 | 4.59 | 351 | 2.72 | 89.9 |
| 5% | 5% | 0.200 | 5.43 | 371 | 2.77 | 88.6 |
| 10% | 10% | 0.266 | 6.48 | 384 | 2.65 | 89.8 |
| 15% | 5% | 0.354 | 6.70 | 347 | 2.49 | 90.9 |

These results show the strength of the base polymer is increased and the solvent resistance is improved. These benefits would not be obtained by copolymerising acrylonitrile with vinyl acetate because low conversion and weak copolymers are the result.

Example V

Bases A and B with 20% by weight overpolymerisation were prepared and tested, the results are in the Table I.

The emulsions were also tested for softness of handle by panel (6) after deposition on a non-woven fabric. The ranking from soft to hard handle was B + 20BA/B/B + 7ACN.13BA/A + 20BA/A&B + 15ACN.5BA/A + 15ACN.5BA/. It is seen the film tensile strength is a measure of softness; addtionally the theoretical Tg also correlates.

In general overpolymerisation with butyl acrylate gave softer polymers, although fabric tensile strength after solvent treatment reduced. Use of higher ethylene content to increase softness would have given increased tackiness. Overpolymerising the softer base (B) with acrylonitrile and butyl acrylate gave a stronger polymer than overpolymerising the harder base with butyl acrylate.

The zero cure results are of value because some emulsion users will use short curing periods.

Example VI

Emulsions were made with 10% butyl acrylate including 0.02% TAC on butyl acrylate in the overpolymerisation. The resultant products were tested for acetone insolubles without curing and the results are given in Table 2.

EP 0 434 387 A2

## Table I

| | % ACN/BA | | Acetone insolubles(%) | | Area Swelling | | Film tensile strength (N/mm²) | | | Fabric tensile strength Kg force | | |
|---|---|---|---|---|---|---|---|---|---|---|---|---|
| | | | uncured | cured | | | 25% | Break | Elong% | initial | wet | Acetone |
| Base | nil | nil | 11.8 | 91.4 | 2.34 | | .241 | 2.64 | 577 | 3.03 | 1.45 | 1.07 |
| A | nil | 20 | 11.7 | 89.4 | 2.95 | | .185 | 2.38 | 683 | 2.56 | 1.26 | 0.79 |
| | 15 | 5 | 44.8 | 96.8 | 2.10 | | .657 | 6.28 | 533 | 3.62 | 1.48 | 1.20 |
| Base | nil | nil | 86.0 | 92.9 | 2.73 | | .152 | 2.80 | 293 | 2.72 | 1.27 | 1.51 |
| B | nil | 20 | 80.6 | 91.3 | 2.94 | | .133 | 2.93 | 312 | 2.27 | 1.23 | 1.20 |
| | 15 | 5 | 86.3 | 94.1 | 2.26 | | .393 | 6.38 | 334 | 3.55 | 1.46 | 1.75 |
| | 7 | 13 | 80.2 | 91.4 | 2.68 | | .210 | 3.96 | 295 | 2.71 | 1.31 | 1.10 |

The result on base B show a softer polymer is obtained with little reduction in strength.

TABLE 2

| | TENSILE STRENGTH (N/mm²) | | | AREA | ACETONE |
|---|---|---|---|---|---|
| | 25% ELONG | BREAK | ELONG (%) | SWELLING | INSOLUBLE (%) |
| B + 10% BA | 0.144 | 2.77 | 322 | 2.86 | 80.1 |
| B + 10% BA+0.02% TAC | 0.144 | 2.73 | 307 | 2.93 | 82.1 |
| A + 10% BA | 0.196 | 2.59 | 574 | 2.98 | 26.5 |
| A + 10% BA+0.02% TAC | 0.183 | 2.80 | 600 | 2.82 | 35.7 |

These results (Table 2) demonstrate copolymer base B, which contains 5% NMA, shows a benefit when overpolymerised with a polymer containing TAC. However larger benefit is shown with base polymer A (3% NMA). We can surmise the lower level of NMA causes base A to take longer to reach cure.

Examples of the application of these emulsions in textile and paper coating will now be given. The emulsions can be compounded into the following formulations using techniques well characterised in the technology. Emulsions for use with non woven fabrics as binders will usually be compounded with the additives commonly used for modifying fabric properties, examples are surfactants, thickeners, water repellants, antifoam agents and pigments. These additives are also usable in textile manufacture together with dispersants, fillers, flame retardants; The emulsions are usable in wallpaper, paper and board coating to give gloss or matt overcoating. Paper and board can be coated to improve pick resistance, provide gloss, rigidity, ink receptivity. They have low residual odour and good colour.

## Claims

1. A copolymer emulsion containing from 30% to 65% by weight solids which comprise copolymer particles having an average particle size in the range about 0.05 micron to about 10 micron comprising a core of self crosslinking vinyl(C1 to C4)alkanoate/C2 to C4 alkylene copolymer overpolymerised with from 3% to 150% by weight of the base copolymer solids of alkyl (C1 to C4) (meth)acrylate, acrylonitrile and mixtures thereof.

2. A copolymer emulsion according to claim 1 wherein the core copolymer contains up to about 60% by weight of vinyl versatate or vinyl chloride.

3. A copolymer emulsion according to claim 1 or 2 wherein the core copolymer contains from about 5% to about 70% of alkylene by weight of the alkylene and vinyl alkanoate.

4. A method of preparing an overpolymerised copolymer emulsion wherein a copolymer emulsion containing from 30% to 65% by weight solid which comprise self crosslinking vinyl(C1 to C4)-alkanoate/C2 to C4 alkylene copolymers, having an average particle size from about 0.05 micron to about 4 micron, is overpolymerised with from 3% to 150% by weight of the base copolymer solids of alkyl(C1 to C4), (meth)acrylate, acrylonitrile and mixtures thereof.

5. The use of the copolymers emulsions of claim 1 or 2 or 3 in the treatment of fabrics, carpets or paper.